Europäisches Patentamt

European Patent Office

Office européen des brevets

(11) Publication number: **0 225 306**
A2

# (12) EUROPEAN PATENT APPLICATION

(21) Application number: 86850423.4

(22) Date of filing: 05.12.86

(51) Int. Cl.⁴: **A 22 C 21/00**
**B 65 G 47/86**

(30) Priority: 06.12.85 AU 3764/85

(43) Date of publication of application:
10.06.87 Bulletin 87/24

(84) Designated Contracting States:
AT BE CH DE ES FR GB GR IT LI LU NL SE

(71) Applicant: Lindholst & Co. PTY. LTD.
49 Prince William Drive
Seven Hills New South Wales 2118(AU)

(72) Inventor: Bowen, David Geoffrey
12 Trigg Avenue
AU-2118 Carlingford New South Wales(AU)

(74) Representative: Roth, Ernst Adolf Michael et al,
GÖTEBORGS PATENTBYRA AB Box 5005
S-402 21 Göteborg(SE)

(54) Automatic "re-hang" apparatus.

(57) In automatic apparatus for a poultry processing plant (this apparatus being of the kind having an overhead chain conveyor for carrying bird carcasses to a rotary hock cutter, and a second overhead chain conveyor for carrying the carcasses to an eviscerating station), a rotary transfer table provided with mechanism enabing it to function as an eccentric wheel. The wheel has a plurality of knuckle-receiving notches, the peripheral spacing of which is continuously variable as the table rotates. Thus, carcasses received by the table at a first spacing can be delivered at a second spacing.

FIG.1

THIS INVENTION relates to poultry processing plant and more particularly to apparatus for transferring slaughtered birds from a first overhead chain conveyor to another such.

Since the processing of meat birds (such as chickens, end-of-lay hens, spent breeding stock, ducks and turkeys) has been to any degree automated, it has been the practice to suspend the live birds head downwards by slotting their feet into shackles depending from an overhead chain conveyor. This conveyor moves the birds through a stunning station, a killing station, a bleeding station, a scalding station, a defeathering station and finally a de-hocking station where the legs of the slaughtered birds are severed at the knee joint by means of a rotating hock-cutter.

This dehocking operation resulted in the birds - now without lower legs - falling onto a table, chute or conveyor belt for eventual manual re-hanging on an overhead chain conveyor for subsequent eviscerating.

Disadvantages of the above-described process include:- possible cross-contamination of carcasses as they lay heaped in the receptacle awaiting re-hanging; the chance of repetitive strain injuries to operators who have to lift the birds and force them into the eviscerating shackles. This is particularly so with such as large turkeys which may weigh 20 kg or more; and the cost of labour of the process.

Health laws in most developed countries now require separate conveyor systems to be used for slaughtering and eviscerating. Moreover, some real advantages accrue from having such a non-continuous conveyor arrangement, with its higher efficiency, as will be realised hereinafter.

While automatic re-hang apparatus' are in production, at the present time they are confined to devices for the transfer of birds between overhead chain conveyors having equal shackle spacings. The shackles which carry the birds can be hooked to the conveyor chains at various spacings, say, 4", 6", 8", 10", 12", etc., and optimum spacing is determined not only by the size of the bird but also by purpose. For example, in the case of chickens, 8" spacing is advantageous for efficient defeathering; on the other hand, 6" spacing might well be required for the eviscerating process. Then again, turkeys may need a reduction of from about 12" to 10" or 8".

The above and other disadvantages are overcome by an automatic rehang device having the ability to transfer birds between conveyors with different shackle spacings. Furthermore, and in a second aspect, the inventive device has the advantage of being able to transfer birds from one slaughtering/defeathering conveyor to two eviscerating conveyors.

In yet another aspect, the inventive device is of use in the transferring birds from an eviscerating conveyor to a chilling or air-cooling conveyor. With respect to the first aspect capability, whereas it is possible to operate a slaughtering and defeathering conveyor at, say, 14,000 birds per hour, the eviscerating conveyor speed is limited by the capacities of the machines associated with it and the physical ability of the operators working the line to perform their manual tasks with the birds moving rapidly by. At a certain line rate it is impossible for the operators even to look at the interior of each carcass as it passes!

Thus, according to the present invention, there is provided automatic re-hang apparatus for a poultry processing plant, the said apparatus comprising a rotary hock cutter; a rotary transfer table; and an eviscerating shackle guide; the rotary transfer table including mechanism enabling it to function as an eccentric wheel provided with a plurality of knuckle-receiving notches, the peripheral spacing of which is continuously variable as the table rotates, whereby carcasses received by the transfer table from the hock cutter at a first spacing are enabled to be delivered to at least one eviscerating overhead chain conveyor at a second spacing.

The invention also resides in automatic re-hang apparatus for a poultry processing plant, the said apparatus comprising a first overhead chain conveyor; a rotary transfer table; and a second overhead chain conveyor; the rotary transfer table including mechanism enabling it to function as an eccentric wheel provided with a plurality of knuckle-receiving notches, the peripheral spacing of which is continuously variable as the table rotates, whereby carcasses received by the transfer table from the first overhead chain conveyor at a first spacing are enabled to be delivered to said second overhead chain conveyor at a second spacing.

In order that a better understanding of the present invention may be gained, hereinafter will be described certain embodiments thereof, by way of example only and with reference to the accompanying schematic drawings in which:-

FIGURE 1 is a top plan view;

FIGURE 1A is a top plan view of another hock cutter;

FIGURE 2 is a side elevation;

FIGURE 3 shows an alternative part-sector; and

FIGURE 4 illustrates an alternative rotary hock cutter.

Slaughtered and defeathered birds are conveyed by an overhead conveyor chain towards the re-hang apparatus. As they approach, hung in killing shackles, lugs 1 on rotary hock cutter 2 ensure that each carcass is guided into the correct position for accurate cutting and transfer. Ancillary lugs 1A between lugs 1 prevent displacement of the carcass legs. Guide rods, as 3, above and below hock cutter 2 bend the leg of the bird at the joint between the lower leg and the drumstick so as to present the joint accurately to a circular blade 4 which severs the leg at the joint. This blade is driven by an electric motor gearbox unit (not shown); the guide bars and the blade are all positionally adjustable so that optimum efficiency can be achieved. Blade 4 co-acts with an annular cutting groove 5 in hock cutter 2.

When the legs have been severed, the bird is freed from its killing shackle and, no longer held against the cutter by the guides, falls away. However, the knuckles are engaged with notches 6 in the periphery of a rotary transfer table, generally referenced 7, preventing the bird from falling further, and the guide prevents the knuckles from slipping out of the notches. Both upper and lower guides, as 3, are shaped to conform with the operational perimeter of hock cutter 2 and are of a length to retain the bird until the transfer point is reached. Lower guide 3 is preferably fabricated from stainless steel pipe drilled at close intervals along the top so that water introduced into the guide will spray out of the holes. This provides lubrication between the guide and the parts of the bird in sliding contact with it, thus preventing damage to the skin of the drumsticks.

Considering now the rotary transfer table 7, its working perimeter is composed of a number of part-sectors 9, each of which is provided with a pair of notches, as 6, which conform to the spacing between the suspension points on the shackles. Each part-sector 9 is mounted, on bushed slides, on a circular base plate 10, so that it is free to slide towards and away from the centre of base plate 10. Each part-sector 9 is further provided with a camming wheel or similar device which, in turn, co-operates with a camming face fitted to a stationary plate. Thus, as base plate 10 rotates, the camming face guides the part-sectors 9 in and out so that rotary transfer table 7 is enabled to function as an eccentric wheel. As this turns, the radius at one side is constantly maintained at a different measurement to that on the other side, making it possible to thus vary the spacings between each part-sector from one side of table 7 to the other. This enables the table to be loaded from the hock cutter at one spacing and discharged to the eviscerating shackles at another. The transfer table and camming arrangement is built up to suit the shackle spacings desired; the most usual application will be to transfer from the killing conveyor at 8" centres to the eviscerating conveyor at 6" centres.

As the transfer table turns, conveying the birds towards the transfer point and varying the spacing, synchronised eviscerating conveyor shackles, as 11, are gradually brought into contact with transfer table 7. Each shackle 11 lines up precisely with notches 6 in part-sectors 9.

At the transfer point, a pressure wheel 12 bears on the knuckle at the point where it protrudes through transfer table 7 and gently eases it out of its notch and into the suspension point on an eviscerating shackle 11 aligned with the notch.

A second pressure wheel 13 is located beneath rotary transfer table 7 and exerts additional pressure on the drumstick in the suspension point of eviscerating shackle 11 to force it down even further and more firmly into the shackle. The bird, thus suspended from an eviscerating conveyor shackle is then conveyed away.

One killing/defeathering line may service two eviscerating lines by the installation, in the processing plant, of a pair of automatic re-hang apparatus.

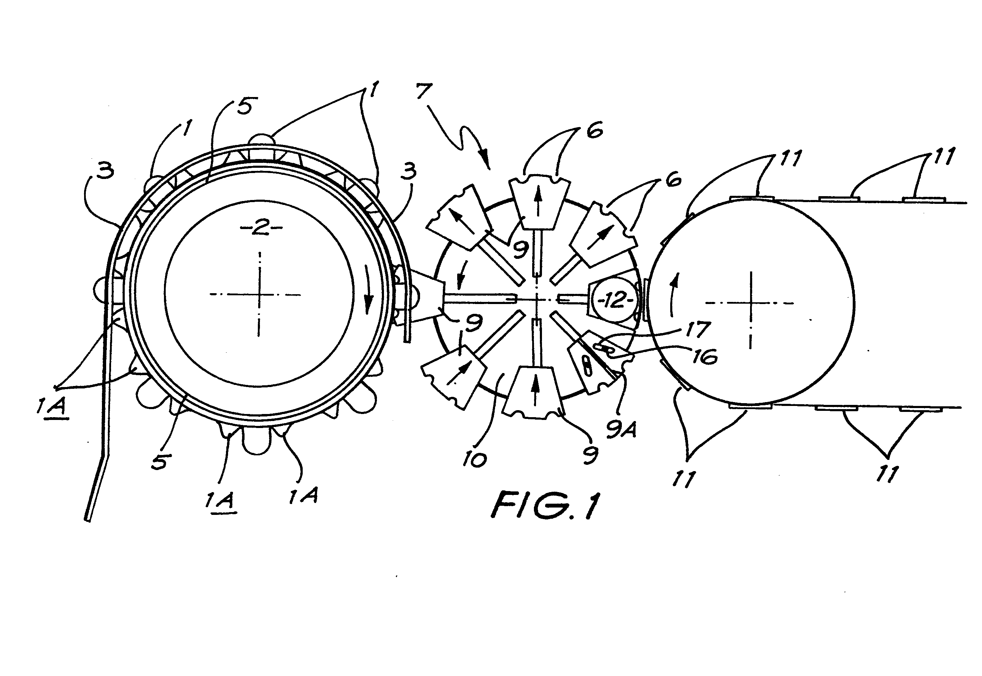

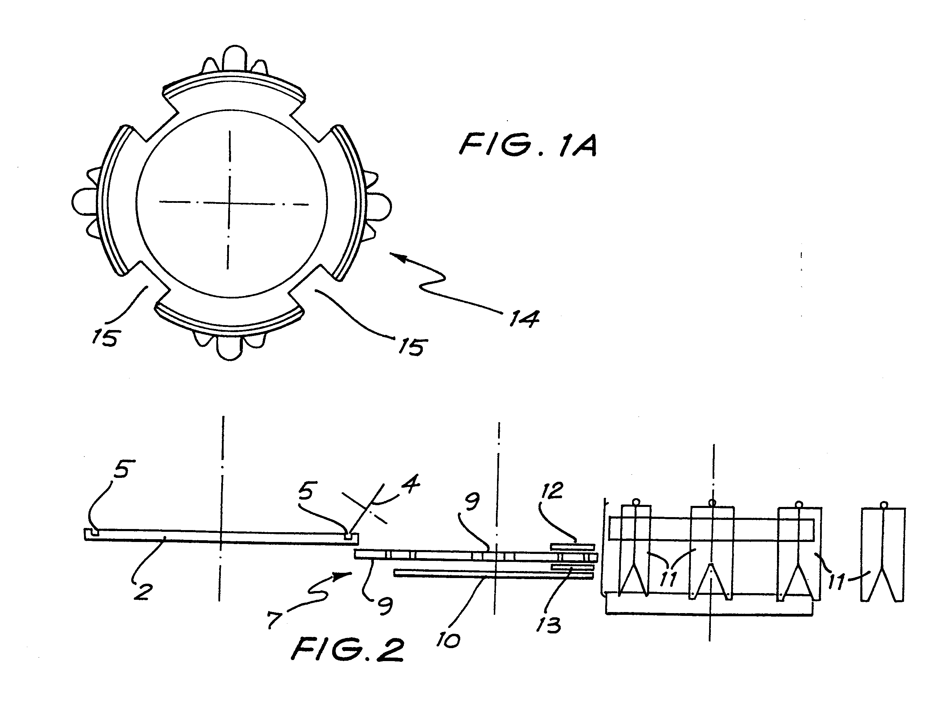

The killing/defeathering overhead chain conveyor runs about a hock cutter, generally referenced 14, shown fragmentarily in Figure 1A, adapted to allow each second bird to be kept away from, and out of contact with, the circular cutting blade. This is achieved by providing a number of bights 15 in the periphery of the hock cutter so as to allow a bird to hang freely, out of contact with the guide rod arrangement which would otherwise present the bird for hock cutting.

Thus, the birds cut from the killing/defeathering conveyor will be at double the shackle spacing on the killing line. Rotary transfer table 7 is therefore set up to load the carcasses at this spacing and to reduce the spacing to that of the eviscerating line before discharge.

The birds remaining on the killing/defeathering line are then presented to the hock cutter of the second automatic re-hang apparatus which cuts them off the line and loads them on the transfer table which, in turn, once again has to be set up to accordingly reduce the shackle spacing.

In this manner the birds are evenly distributed between the two eviscerating lines.

It will be understood that the rotary hock cutter and the rotary transfer table are linked together mechanically to synchronise their functions, while the eviscerating shackle guide is synchronised with the first two components either mechanically or electronically. If this linkage is mechanical, a disengaging clutch is incorporated, as the overhead eviscerating chain conveyor should be capable of being operated independently of the killing/defeathering chain conveyor.

Moreover, in a variation, it is possible to change the distance between the suspension points for the legs as the bird is transferred from one conveyor to another. For example, the bird may be suspended by a shackle with a wide spacing between the legs on the killing/defeathering line and transferred to a shackle with a lesser spacing on the eviscerating line.

This may be achieved by arranging the part-sectors as shown at 9A in the drawing, so that each half of the part-sector is able to be operated independently. As each part-sector is moved forwards or backwards by the cam or other mechanism, stationary pins, as 16, in the angled slots 17 will either widen or narrow the distance between the notches in all but the extreme positions.

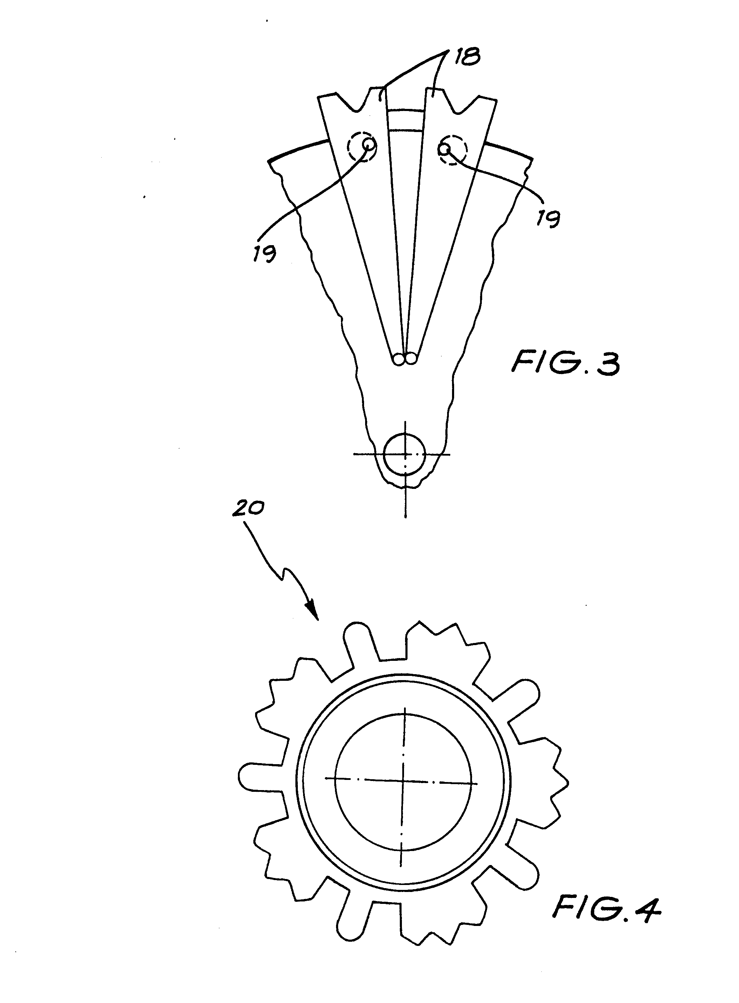

Figure 3 shows another variation in which each part-sector 18 of an inventive rotary transfer table is again divided into two portions to permit inter-changeability of shackle width so that both legs of each bird may be firmly held by the same guide rail. Each portion is secured for adjustment of shackle width by eccentric fastening means 19.

In Figure 4 there is to be seen a rotary hock cutter of different plan, generally referenced 20. Hock cutter 20 is of the kind employed for servicing two eviscerating lines, analagous to hock cutter 14 of Figure 1A. However, hock cutter 20 has ten shackle positions compared to hock cutter 14's eight.

It will be realised that each chain conveyor sprocket is provided with conventional capturing lugs about its periphery to catch and hold firm the suspended shackles during unloading and transfer operations.

For the reasons outlined earlier, i.e. health, operator strain, and labour saving, the device can also be used in other parts of the poultry processing plant to transfer birds from one conveyor to another, as under:-

EVISCERATING LINE TO AIR COOLING LINE.

In some parts of the world, birds are chilled after evisceration by placing them in a refrigerated room where they are subjected to currents of cold air to reduce the carcass temperature as quickly as possible.

In the less automated plants, the birds are manually hung on mobile racks, and wheeled into the room where they remain for a prescribed period.

Alternatively, an overhead conveyor system can be constructed inside the room. The length of the overhead conveyor and the number of suspension shackles fitted to the conveyor inside the room is determined by the line speed (i.e. birds per hour) and the length of time required to chill the birds. For example, if the plant is operating at 6,000 per hour, and one hour is required to chill the birds, the conveyor inside the room must be capable of suspending 6,000 birds.

Thus it is a real advantage to be able to transfer automatically from the eviscerating line direct to the air cooling line.

The eviscerating line shackles are caught, steadied and held firmly by a first sprocket wheel.

The birds are unloaded from the eviscerating shackles by an angled bar which forces the legs up and out of the shackles.

One leg is allowed to fall free, and the other is forced into the notch in the rotary transfer table.

The birds continue around the transfer table, which is substantially the same as that used for the killing/ eviscerating transfer process, except that it is only necessary to suspend the birds by one leg. Shackle spacing is different, as the air cooling line constructed with the birds hanging fairly close - the further apart they are the bigger the room required. So it would be possible to transfer from the eviscerating line to 6 inch centres to the air cooling line at 3 or 4 inch centres.

At the other end of the transfer table, the birds are forced out of the notches and into the shackles of the air cooling line, these shackles being caught and held firm to present the 'V' of the shackle accurately to the notch of the transfer table in every case.

AIR COOLING LINE TO GRADING/SIZING LINE.
Most poultry processing plants use an overhead conveyor system fitted with a mechanical or computerised weighing device to distribute birds by size and/or quantity throughout the packing and further processing areas of the plant.

The birds are manually hung by one leg on special shackles fitted to the grading line. On lines with computer control, the shackles carrying the birds pass over a weighcell which transmits the data back to a computer. The computer is programmed to distribute the birds by size and/or number at various stations around the plant, and signals are sent to the various drop-off stations to activate an air cylinder which unloads the shackle at that point.

On lines with mechanical weighing devices, the birds are selected by weight as they pass the various unloading stations, where the shackles are unloaded thus releasing the bird to fall into a bin or whatever.

Most computerised grading lines operate at 8 inch centres, as it is important that the birds hang freely without touching each other for greater accuracy at the weighcell.

The air cooling line is at smaller shackle spacings for the reasons mentioned earlier.

Therefore, automatic transfer between the two lines is a real advantage, and can be achieved with this invention.

In a similar manner to the operation of the eviscerating line to air cooling line transfer, the air cooling line shackles are caught and steadied, and the bird, suspended by only one leg, is transferred.

From the abovegoing it will be readily appreciated by those skilled in the art that numerous other variations and modifications may be made to the invention without departing from the spirit and scope thereof as set out in the following claims.

**THE CLAIMS DEFINING THE INVENTION ARE AS FOLLOWS:-**

1. Automatic re-hang apparatus for a poultry processing plant, said apparatus comprising a rotary hock cutter; a rotary transfer table; and an eviscerating shackle guide; said rotary transfer table including mechanism enabling it to function as an eccentric wheel provided with a plurality of knuckle-receiving notches, the peripheral spacing of which is continuously variable as the said transfer table rotates, whereby carcasses received by said transfer table from said hock cutter at a first spacing are enabled to be delivered to at least one eviscerating overhead chain conveyor at a second spacing.

2. Automatic re-hang apparatus for a poultry processing plant, said apparatus comprising a first overhead chain conveyor; a rotary transfer table; and a second overhead chain conveyor; said rotary transfer table including mechanism enabling it to function as an eccentric wheel provided with a plurality of knuckle-receiving notches, the peripheral spacing of which is continuously variable as said table rotates, whereby carcasses received by said transfer table from the first overhead chain conveyor at a first spacing are enabled to be delivered to said second overhead chain conveyor at a second spacing.

3. In automatic re-hang apparatus for a poultry processing plant, which apparatus includes a first overhead chain conveyor and/or a rotary hock cutter and a second overhead chain conveyor; a rotary transfer table provided with mechanism enabling it to function as an eccentric wheel having a plurality of knuckle-receiving notches, the peripheral spacing of which is continuously variable as said transfer table rotates, whereby carcasses received by said transfer table at a first spacing are enabled to be delivered at a second spacing.

4. Automatic re-hang apparatus as claimed in Claim 1 or Claim 2, wherein said rotary transfer table has an operational perimeter composed of a number of part-sectors each of which is provided with a pair of notches; each part-sector being slidably mounted upon a rotable base-plate so as to be able to slide towards, and away from, the axis of rotation of said base-plate by means of a camming mechanism: the arrangement being such that, as said base-plate rotates, the distances between adjacent part-sectors vary continuously between the said first and second spacings.

5. The rotary transfer table as claimed in Claim 3, wherein the said table has an operational perimeter composed of a number of part-sectors each of which is provided with a pair of notches; each part-sector being slidably mounted upon a rotatable base-plate so as to be able to slide towards, and away from, the axis of rotation of said base-plate by means of a camming mechanism: the arrangement being such that, as said base-plate rotates, the distances between adjacent part-sectors vary continuously between the said first and second spacings.

6. Automatic re-hang apparatus as claimed in Claim 4, wherein each part-sector is divided longitudinally into two halves, each provided with one said notch and able to be independently slidably movable, whereby the distance between the notches in each part-sector may be varied in all but the extreme positions.

7. The rotary transfer table as claimed in Claim 5 wherein each part-sector is divided longitudinally into two halves, each provided with one said notch and able to be

- 13 -

independently slidable movably, whereby the distance between the notches in each part-sector may be varied in all but the extreme positions.

8. Automatic re-hang apparatus as claimed in any one of Claims 1, 3, 4, 5, 6 and 7, wherein said rotary hock cutter is provided with equidistantly-spaced peripheral lugs adapted to correctly position defeathered carcasses for feeding to a circular cutting blade associated with the said rotary hock cutter.

9. Automatic re-hang apparatus for a poultry processing plant, substantially as hereinbefore described with reference to the accompanying drawings.

FIG.1

0225306

FIG.1A

FIG.2

0 225 306

FIG.3

FIG.4